# EUROPEAN PATENT APPLICATION

(11) **EP 4 417 402 A1**
(43) Date of publication of application: **21.08.2024**
(21) Application number: 22880272.4
(22) Date of filing: 10.10.2022
(51) Int. Cl.: B29D 7/01, B29B 7/20

(54) **PVC FLOOR PRODUCTION LINE**

(30) Priority: 14.10.2021 CN 202122482616 U
(71) Applicant: Wuxi Boyu Plastic Machinery Co., Ltd., Wuxi, Jiangsu 214111 (CN)
(72) Inventor: LU, Dingyi, Wuxi, Jiangsu 214111 (CN)
(74) Representative: PGA S.p.A., Milano, Succursale di Lugano
(86) International application number: PCT/CN2022/124428
(87) International publication number: WO 2023/061335

(57) **Abstract**

The present application discloses a PVC floor production line, the production line comprising a feeding system, an internal mixing and extruding device, a calendering and laminating device, a cooling device, a tractor and a cutting machine which are sequentially arranged along a material conveying direction, wherein the internal mixing and extruding device comprises an internal mixing mechanism, an extruding mechanism and a hopper. According to the production line of the present application, an internal mixing section of the internal mixing and extruding device is used for quickly dispersing and plasticizing materials, and the plasticized materials directly enter an extruding section by passing through the hopper to carry our extruding and moulding, the plasticizing effect is good, and thus the problem that conventional extruders forcibly plasticize rigid PVC products that do not contain plasticizers thus leading to a poor plasticizing effect is avoided. In addition, the materials are directly extruded after being plasticized without needing to pass through a high-speed mixer, and thus the internal mixing and extruding time of the materials is shortened, energy consumption is reduced, and the usage amounts of a stabilizer and internal and external lubricants in a raw material formula are reduced.

## Description

### Technical field

This application relates to the technical field of floor manufacturing, in particular to a PVC floor production line.

### Background art

In the extruding stage of existing PVC flooring production, a high-speed mixer is first used to stir the material to a high temperature of about 120°C, and then it is discharged into a cooling mixer for cooling, and a conical twin-screw extruder with good shear force is used for forced plasticization. This method wastes a lot of energy. It needs to be heated for about 20-40 minutes, cooled at high temperature, and then discharged into an extruder heated to 190-200°C for plasticization and extrusion into plates. The material is heated to 120-135°C by a high-speed mixer, and then cooled to about 50°C by a cooling mixer. There is a temperature difference of 70-85°C in the middle. This method has high energy consumption, a long mixing time cycle, and high mixing costs. Furthermore, the material is plasticized only through forced shearing and frictional heat generation by the screw rod of the extruder. For PVC rigid products that do not contain plasticizers, the plasticizing effect is not good.

### Summary of invention

This application aims to solve at least one of the technical problems existing in the prior art. For this reason, this application proposes a PVC floor production line, which can reduce energy consumption, shorten the time of mixing and extruding materials, reduce costs, and optimize the plasticizing effect. It is suitable for rigid PVC products without plasticizers.

The PVC floor production line according to the embodiment of the first aspect of the present application comprises a feeding system, an internal mixing and extruding device, a calendering and laminating device, a cooling device, a tractor and a cutting machine arranged in sequence along a material conveying direction, a film material unwinding mechanism being arranged on top of the calendering and laminating device, feeding tracks being arranged between the calendering and laminating device, the cooling device, the tractor and the cutting machine; the internal mixing and extruding device comprising an internal mixing mechanism, an extruding mechanism and a hopper, the internal mixing mechanism comprising an internal mixing chamber, a first feed port being arranged at a rear end of the internal mixing chamber, and a first discharge port being arranged at a front end of the internal mixing chamber, rotors being arranged along front and rear in the internal mixing chamber, the extruding mechanism being located below the internal mixing mechanism, the extruding mechanism comprising an extruding chamber, a second feed port being arranged at a rear end of the extruding chamber, a mould being arranged at a front end of the extruding chamber, a screw rod being arranged along front and rear in the extruding chamber, the hopper being connected between the first discharge port and the second feed port.

The PVC floor production line according to the embodiment of the present application has at least the following beneficial effects: the production line of the present application uses the internal mixing section of the internal mixing and extruding device to quickly disperse and plasticize the materials, and the plasticized materials directly enter the extruding section through the hopper to carry out extruding moulding, and the plasticizing effect is good, which avoids the problem of poor plasticizing effect caused by forced plasticizing of rigid PVC products without plasticizers by traditional extruders, and does not need to go through a high-speed mixer, and the material is directly extruded after plasticized, thereby shortens the time of mixing and extruding materials, reduces energy consumption, and reduces the amount of stabilizers and internal and external lubricants used in the raw material formula. The production line of the present application has a high degree of automation and can realize continuous and efficient production of PVC flooring.

According to some embodiments of the present application, the rotor is a double-kneaded structure, and the rotor comprises a rotor shaft, on which a feeding conveying section, a first mixing section, a first screw section, a second mixing section, and a first discharge section are sequentially arranged. This type of rotor can effectively fill the entire internal mixing chamber with materials during internal mixing, with high filling rate and good dispersion. It is suitable for temperature-sensitive raw materials and makes the plasticizing effect of materials good.

According to some embodiments of the present application, a second screw section is further provided between the second mixing section and the first discharge section. The entire rotor is lengthened, which has a good effect on the material discharge. Before the material is discharged, the material is cut from the original block into small pieces or large particles, which is convenient for the feeding of the extruding chamber below. In addition, it can also improve the plasticizing effect and shorten the time.

According to some embodiments of the present application, the rotor has a single kneaded structure, and the rotor comprises a rotor shaft, on which a feeding conveying section, a mixing section, and a second discharge section are sequentially arranged. This type of rotor has strong versatility and good stability for conveying materials.

According to some embodiments of the present application, a third screw section is further provided between the mixing section and the second discharge section. The entire rotor is lengthened, which has a good effect on the material discharge. Before the material is discharged, the material is cut from the original block into small pieces or large particles, which is convenient for the feeding of the extruding chamber below. In addition, it can also improve the plasticizing effect and shorten the time.

According to some embodiments of the present application, a forced feeding device is provided in the hopper, and the forced feeding device comprises two rotating shafts arranged in parallel, paddles are provided on the rotating shafts, and the two rotating shafts rotate relatively.

According to some embodiments of the present application, the two rotating shafts are respectively driven by a driving gear and a driven gear meshing with each other.

According to some embodiments of the present application, the screw rod is a conical twin screw rod, a single screw rod or a parallel twin screw rod.

According to some embodiments of the present invention, the feeding system comprises a vacuum feeder, a loss-in-weight feeder and a mixing bin connected in sequence. The discharge port of the mixing bin is provided with a screw meter. The feed port is connected with the first feed port. The materials are conveyed to the loss-in-weight feeder through the vacuum feeder and are accurately batched using the loss-in-weight feeder. The batched materials are temporarily stored in the mixing bin and are fed by the screw meter to the internal mixing and extruding device. The materials directly enter the internal mixing and extruding device for internal mixing and extruding without passing through the high-speed mixer.

According to some embodiments of the present application, the calendering and laminating device is one of a three-roll calender, a four-roll calender, or a five-roll calender. The above calender integrates calendering and laminating or embossing, which can realize the thickness setting and surface effect treatment of the substrate.

According to some embodiments of the present application, the calendering and laminating device is a five-roll calender, and the five-roll calender comprises a set of thickness-setting rollers, a set of pre-laminating rollers, and a set of pressing rollers, the set of pressing rollers comprising embossing rollers, and the embossing rollers being provided with a water cooling device. The extruded substrate is calendered by the set thickness-setting rollers to obtain the target thickness, and then laminated and embossed by the set of pre-laminating rollers and the set of pressing rollers. By using the five-roll calender, the substrate layer, printing layer, and wear-resistant layer can be easily and quickly pressed into shape, and clear and sharp embossed patterns can be produced.

According to some embodiments of the present application, the calendering and laminating device may also be a calendering and laminating line composed of a set of thickness-setting rollers and a plurality of laminating units, and the thickness-setting rollers are located at the front end of the calendering and laminating line. A plurality of laminating units are sequentially connected behind the thickness-setting roller. The number of laminating units increases or decreases according to the demand of the product. The film material unwinding mechanism is located above the laminating unit. The laminating unit comprises a preheating roller, a laminating roller, and a roller conveying line for carrying materials. Further, the roller conveying line can be equipped with a preheating system. Further, the end of the calendering and laminating line is also equipped with embossing rollers. The extruded substrate is first calendered by a thickness-setting roller, and then passed through multiple laminating units in sequence to coat the substrate with a film, and finally passed through an embossing roller.

According to some embodiments of the present application, an automatic plate lifter is further provided after the cutting machine, for stacking the cut boards.

According to some embodiments of the present application, more than two internal mixing and extruding devices are provided to form a co-extruding system, and ABA and ABC-type composite substrates can be obtained through the co-extruding process.

Additional aspects and advantages of the application will be set forth in part in the description which follows, and in part will be obvious from the description, or may be learned by practice of the application.

### Description of drawings

The above and/or additional aspects and advantages of the present application will become apparent and easily understood from the description of the embodiments in conjunction with the following drawings, wherein:
Fig. 1 is the overall structure schematic diagram of the embodiment of the present application;
Fig. 2 is the structural representation of the internal mixing and extruding device 200 of the present application;
FIG. 3 is a schematic diagram of the first structure of the rotor 1000 of the present application;
FIG. 4 is a second structural schematic diagram of the rotor 1000 of the present application;
FIG. 5 is a schematic diagram of the third structure of the rotor 1000 of the present application;
FIG. 6 is a schematic diagram of a fourth structure of the rotor 1000 of the present application.

Reference signs: vacuum feeder 110, loss-in-weight feeder 120, mixing bin 130, internal mixing and extruding device 200, internal mixing mechanism 210, internal mixing chamber 211, first feed port 212, first discharge port 213 , extruding mechanism 220, extruding chamber 221, second feed port 222, mould 223, screw rod 224, hopper 230, forced feeding device 231, five-roll calender 300, cooling device 400, tractor 500, cutting machine 600, automatic plate lifter 700, film material unwinding mechanism 800, feeding track 900, rotor 1000, rotor shaft 1010, feeding conveying section 1020, first mixing section 1030, first screw section 1040, second mixing section 1050 , first discharge section 1060 , second screw section 1070, mixing section 1080 , second discharge section 1090 , and third screw section 1100.

### Detailed Description

Embodiments of the present application are described in detail below, examples of which are shown in the drawings, wherein the same or similar reference signs denote the same or similar elements or elements having the same or similar functions throughout. The embodiments described below by referring to the figures are exemplary, and are only for explaining the present application, and should not be construed as limiting the present application.

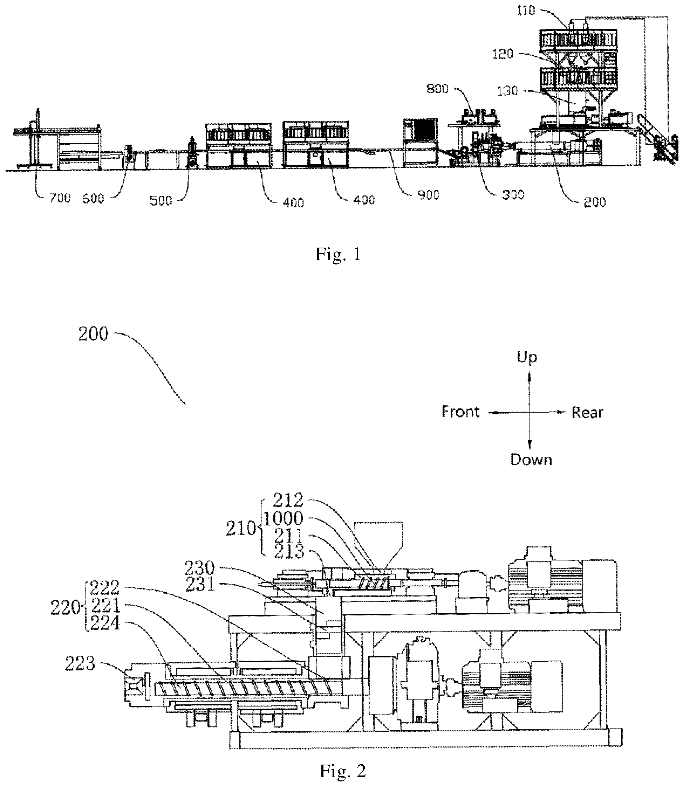

Referring to Figures 1 and 2, a PVC flooring production line is provided with a feeding system, an internal mixing and extruding device 200, a five-roll calender 300, a cooling device 400, a tractor 500, a cutting machine 600 and an automatic plate lifter 700 in sequence along the material conveying direction. On top of the five-roll calender 300 is provided with a film material unwinding mechanism 800, and the five-roll calender 300, the cooling device 400, the tractor 500 and the cutting machine 600 are equipped with a feeding track 900; the feeding system comprising a vacuum feeder 110, a loss-in-weight feeder 120 and a mixing bin 130 connected in sequence, the discharge port of the mixing bin 130 is provided with a screw meter, and the discharge port of the mixing bin 130 is connected to the first feed port 212; The internal mixing and extruding device 200 comprises an internal mixing mechanism 210, an extruding mechanism 220 and a hopper 230. The internal mixing mechanism 210 comprises an internal mixing chamber 211. The rear end of the internal mixing chamber 211 is provided with a first feed port 212, and the front end is provided with a first discharge port 213, the rotors 1000 are arranged along the front and rear in the internal mixing chamber 211, the extruding mechanism 220 is located under the internal mixing mechanism 210, the extruding mechanism 220 comprises an extruding chamber 221, and the rear end of the extruding chamber 221 is provided with a second feed port 222, the front end is provided with a mould 223, the extruding chamber 221 is provided with a screw rod 224 arranged along the front and rear, the hopper 230 is connected between the first discharge port 213 and the second feed port 222; a forced feeding device 231 is provided in the hopper 230, and the forced feeding device 231 comprises two rotating shafts arranged in parallel, on which paddles are arranged, and the two rotating shafts rotate relatively, and the two rotating shafts are respectively driven by a driving gear and a driven gear meshing with each other; the five-roll calender 300 comprises a set of thickness-setting rollers, a set of pre-laminating rollers, and a set of pressing rollers. The set of pressing rollers comprises embossing rollers, and the embossing rollers are provided with a water cooling device.

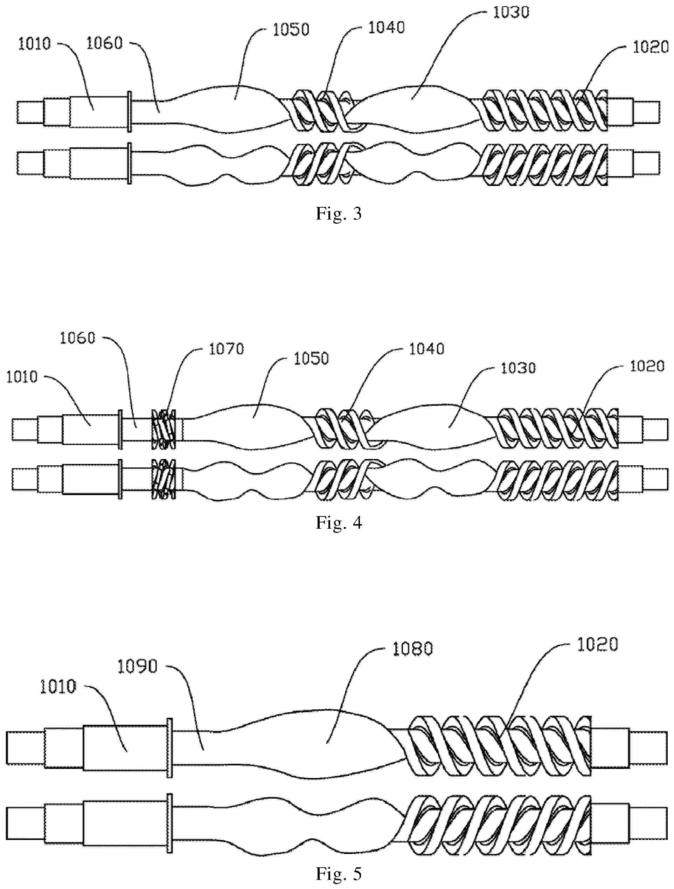

In some of these embodiments, referring to Fig. 3, the rotor 1000 has a double kneaded structure, and the rotor 1000 comprises a rotor shaft 1010, on which a feeding conveying section 1020, a first mixing section 1030, a first screw section 1040, a second mixing section 1050 and a first discharge section 1060 are sequentially arranged. This type of rotor can effectively fill the entire internal mixing chamber with materials during internal mixing, with high filling rate and good dispersion. It is suitable for temperature-sensitive raw materials and makes the plasticizing effect of materials good.

In some of these embodiments, referring to Fig. 4, the rotor 1000 has a double kneaded structure, and the rotor 1000 comprises a rotor shaft 1010, on which a feeding conveying section 1020, a first mixing section 1030, a first screw section 1040, a second mixing section 1050 and a first discharge section 1060 are sequentially arranged. A second screw section 1070 is also provided between the second mixing section 1050 and the first discharge section 1060. The entire rotor is lengthened, which has a good effect on the material discharge. Before the material is discharged, the material is cut from the original block into small pieces or large particles, which is convenient for the feeding of the extruding chamber below. In addition, it can also improve the plasticizing effect and shorten the time.

In some of these embodiments, referring to FIG. 5, the rotor 1000 has a single kneaded structure, and the rotor 1000 comprises a rotor shaft 1010, on which a feeding conveying section 1020, a mixing section 1080 and a second discharge section 1090 are sequentially arranged. This type of rotor has strong versatility and good stability for conveying materials.

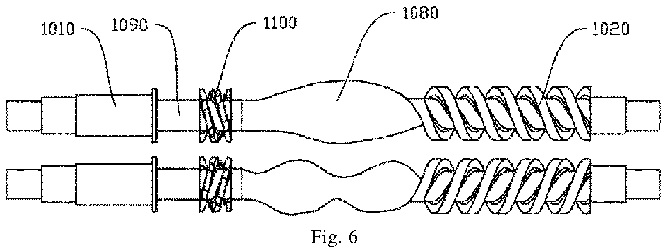

In some of these embodiments, referring to FIG. 6, the rotor 1000 has a single kneaded structure, and the rotor 1000 comprises a rotor shaft 1010, on which a feeding conveying section 1020, a mixing section 1080 and a second discharge section 1090 are sequentially arranged. A third screw section 1100 is also provided between the mixing section 1080 and the second discharge section 1090. The entire rotor is lengthened, which has a good effect on the material discharge. Before the material is discharged, the material is cut from the original block into small pieces or large particles, which is convenient for the feeding of the extruding chamber below. In addition, it can also improve the plasticizing effect and shorten the time.

In some of these embodiments, the screw rod 224 is a conical twin screw rod, a single screw rod or a parallel twin screw rod.

The embodiments of the present application have been described in detail above in conjunction with the accompanying drawings, but the present application is not limited to the above-mentioned embodiments. Within the scope of knowledge possessed by those of ordinary skill in the art, various modifications can be made without departing from the purpose of the present application.

## Claims

1. A PVC floor production line, **characterized in that**, it comprises a feeding system, an internal mixing and extruding device, a calendering and laminating device, a cooling device, a tractor and a cutting machine arranged in sequence along a material conveying direction, a film material unwinding mechanism being arranged on top of the calendering and laminating device, feeding tracks being arranged between the calendering and laminating device, the cooling device, the tractor and the cutting machine; the internal mixing and extruding device comprising an internal mixing mechanism, an extruding mechanism and a hopper, the internal mixing mechanism comprising an internal mixing chamber, a first feed port being arranged at a rear end of the internal mixing chamber, and a first discharge port being arranged at a front end of the internal mixing chamber, rotors being arranged along front and rear in the internal mixing chamber, the extruding mechanism being located below the internal mixing mechanism, the extruding mechanism comprising an extruding chamber, a second feed port being arranged at a rear end of the extruding chamber, a mould being arranged at a front end of the extruding chamber, a screw rod being arranged along front and rear in the extruding chamber, the hopper being connected between the first discharge port and the second feed port.

2. The PVC floor production line according to claim 1, **characterized in that** the feeding system comprises a vacuum feeder, a loss-in-weight feeder, and a mixing bin connected in sequence, a screw meter being provided at a discharge port of the mixing bin, the discharge port of the mixing bin is connected with the first feed port.

3. The PVC floor production line according to claim 1, **characterized in that** the calendering and laminating device is one of a three-roll calender, a four-roll calender or a five-roll calender.

4. The PVC floor production line according to claim 1, **characterized in that** the calendering and laminating device is a five-roll calender, and the five-roll calender comprises a set of thickness-setting rollers, a set of pre-laminating rollers, and a set of pressing rollers, the set of pressing rollers comprising embossing rollers, and the embossing rollers being provided with a water cooling device.

5. The PVC floor production line according to claim 1, **characterized in that** an automatic plate lifter for stacking products is provided after the cutting machine.

6. The PVC floor production line according to claim 1, **characterized in that** two or more internal mixing and extruding devices are arranged to form a co-extruding system.

7. The PVC floor production line according to claim 1, **characterized in that** a forced feeding device is provided in the hopper, and the forced feeding device comprising two rotating shafts arranged in parallel, paddles being arranged on the rotating shafts, the two rotating shafts rotating relative to each other.

8. The PVC floor production line according to claim 1, **characterized in that** the rotor has a double kneaded structure, the rotor comprising a rotor shaft, and a feeding conveying section, a first mixing section, a first screw section, a second mixing section and first a discharge section being sequentially arranged on the rotor shaft.

9. The PVC floor production line according to claim 8, **characterized in that** a second screw section is further arranged between the second mixing section and the first discharge section.

10. The PVC floor production line according to claim 1, **characterized in that** the rotor has a single kneaded structure, the rotor comprising a rotor shaft, a feeding conveying section, a mixing section and a second discharge section being sequentially arranged on the rotor shaft.
